(19) Europäisches Patentamt
European Patent Office
Office européen des brevets

(11) Veröffentlichungsnummer: **0 149 170 B1**

(12) # EUROPÄISCHE PATENTSCHRIFT

(45) Veröffentlichungstag der Patentschrift: **20.04.88**

(51) Int. Cl.⁴: **C 09 B 62/513**

(21) Anmeldenummer: **84115630.0**

(22) Anmeldetag: **17.12.84**

(54) **Reaktivfarbstoffe, deren Herstellung und Verwendung.**

(30) Priorität: **20.12.83 CH 6755/83**

(43) Veröffentlichungstag der Anmeldung: **24.07.85 Patentblatt 85/30**

(45) Bekanntmachung des Hinweises auf die Patenterteilung: **20.04.88 Patentblatt 88/16**

(84) Benannte Vertragsstaaten: **CH DE FR GB IT LI**

(56) Entgegenhaltungen:
**EP - A - 0 043 560**
**EP - A - 0 063 276**
**EP - A - 0 068 204**
**DE - A - 2 929 107**
**FR - A - 1 476 297**

(73) Patentinhaber: **CIBA-GEIGY AG, Klybeckstrasse 141, CH-4002 Basel (CH)**

(72) Erfinder: **Tzikas, Athanassios, Dr., Muttenzerstrasse 78, CH-4133 Pratteln (CH)**

(74) Vertreter: **Zumstein, Fritz, Dr. et al, Bräuhausstrasse 4, D-8000 München 2 (DE)**

**EP 0 149 170 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben von Baumwolle nach dem Kaltverweilverfahren werden heute Reaktivfarbstoffe gefordert, die eine ausreichende, der niedrigen Färbetemperatur angepasste Substantivität haben und die zugleich eine gute Auswaschbarkeit der nicht fixierten Anteile aufweisen. Sie sollen ferner eine hohe Reaktivität besitzen, so dass nur kurze Verweilzeiten erforderlich sind, und sie sollen insbesondere Färbungen mit hohen Fixiergraden liefern. Von bekannten Farbstoffen werden diese Anforderungen nur in ungenügendem Masse erfüllt.

Der vorliegenden Erfindung lag daher die Aufgabe zugrunde, neue, verbesserte Reaktivfarbstoffe für das Kaltverweilverfahren zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen bireaktiven Farbstoffen die gestellte Aufgabe gelöst wird.

Gegenstand der Erfindung sind Reaktivfarbstoffe der Formel

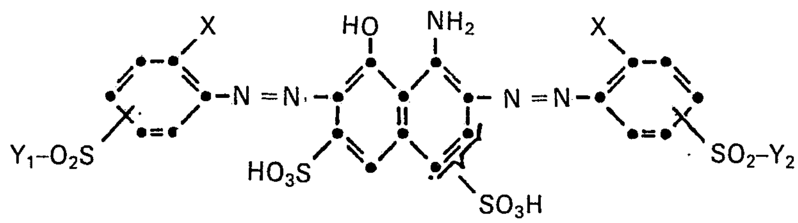

(1),

worin ein X Wasserstoff und das andere X Sulfo, $Y_1$ und $Y_2$ unabhängig voneinander ein Rest $-CH=CH_2$, $-CH_2CH_2OSO_3H$, $-CH_2CH_2SSO_3H$, $-CH_2CH_2Cl$ oder $-CH_2CH_2OR$, und R niedrigmolekulares Alkanoyl; oder Benzoyl oder Benzolsulfonyl, das durch $C_{1-4}$-Alkyl, $C_{1-4}$-Alkoxy, Halogen, Carboxy oder Sulfo substituiert sein kann, ist.

Ist R niedrigmolekulares Alkanoyl, enthält dieses vorzugsweise 1 bis 6 Kohlenstoffatome, Beispiele sind: Acetyl, Propionyl, und Butyryl, bevorzugt ist Acetyl. Ist R Benzoyl oder Benzolsulfonyl kommen als Substituenten in Betracht: Methyl, Äthyl, Propyl, Isopropyl, Butyl, Isobutyl, sek.-Butyl, tert.-Butyl, Methoxy, Äthoxy, Propoxy, Isopropoxy, Butoxy, Isobutoxy, sek.-Butoxy, tert.-Butoxy, Fluor, Chlor, Brom, Carboxy oder Sulfo. Bevorzugt sind Methyl, Äthyl, Methoxy, Äthoxy, Chlor, Carboxy oder Sulfo.

Die Reste $Y_1$ und $Y_2$ sind vorzugsweise gleich, insbesondere ist $Y_1$ und $Y_2$ je ein Rest $-CH=CH_2$ oder $-CH_2CH_2OSO_3H$.

Bevorzugt sind insbesondere Reaktivfarbstoffe der Formeln:

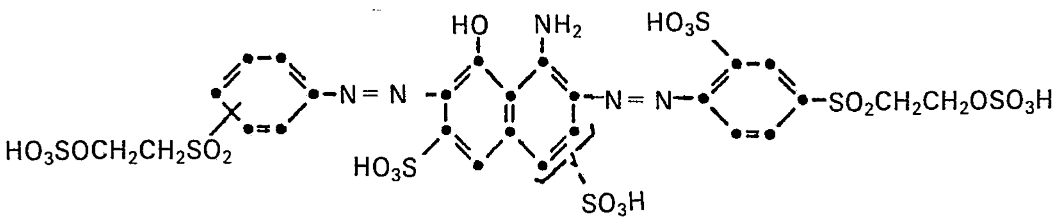

(2)

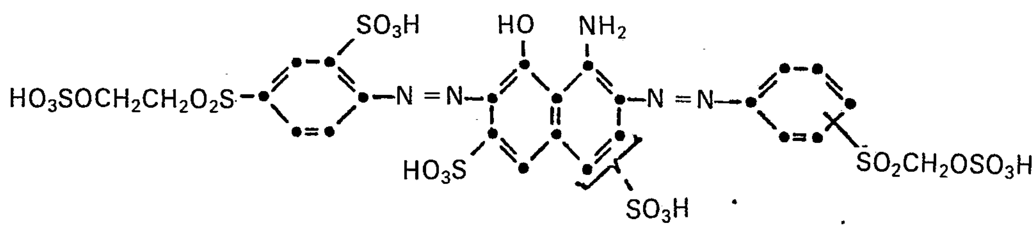

(3),

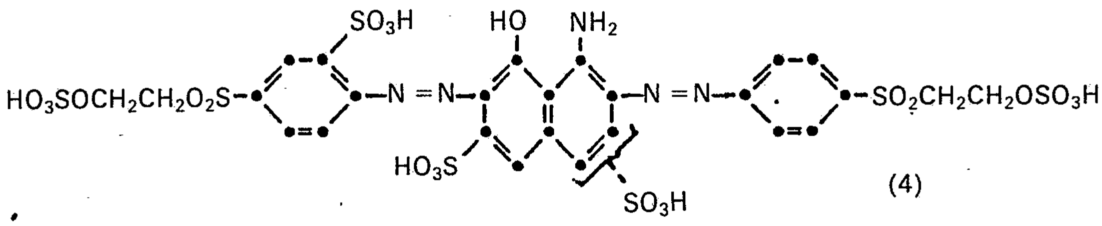

(4)

und

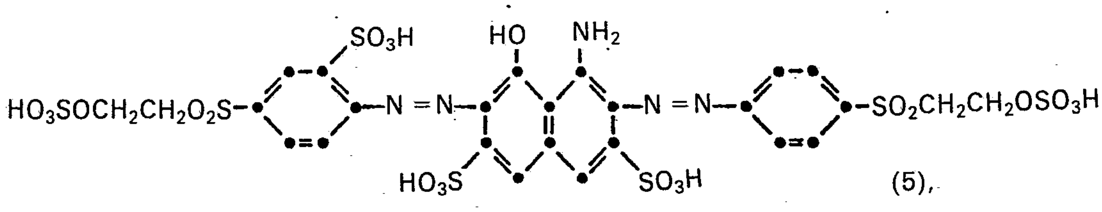

(5),

sowie die entsprechenden Vinylsulfonverbindungen.

Das Verfahren zur Herstellung der Reaktivfarbstoffe der Formel (1) ist dadurch gekennzeichnet, dass man Diazokomponenten der Formeln

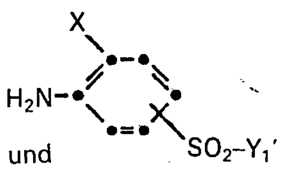

und (6)

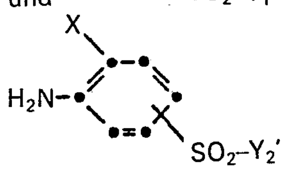

(7),

worin ein X Wasserstoff und das andere X Sulfo und $Y_1'$ und $Y_2'$ unabhängig voneinander –OH oder ein Rest $-CH=CH_2$, $-CH_2CH_2OSO_3H$, $-CH_2CH_2SSO_3H$, $-CH_2CH_2Cl$ oder $-CH_2CH_2OR$ ist, und R die unter Formel (1) angegebene Bedeutung hat, diazotiert und mit 1-Amino-8-hydroxynaphthalin-3,6- oder -4,6-disulfonsäure kuppelt, und, falls $Y_1'$ bzw. $Y_2'$ –OH ist, dieses in einen der anderen für $Y_1'$ und $Y_2'$ genannten Reste überführt und gegebenenfalls eine weitere Umwandlungsreaktion anschliesst.

Man führt die Umsetzung schrittweise nacheinander aus; dabei muss die Kupplung auf die Mittelkomponente in saurer Lösung, in ortho-Stellung zur $NH_2$-Gruppe, zuerst ausgeführt werden, da bei vorangehender Kupplung in neutraler oder alkalischer Lösung, in ortho-Stellung zur OH-Gruppe, eine nachfolgende Kupplung in ortho-Amino-Stellung nicht mehr möglich ist.

Eine weitere Methode besteht darin, zunächst einen Farbstoff herzustellen, der eine Vorstufe des Reaktivrestes enthält, und diese nachträglich in die Endstufe umzuwandeln, z.B. durch Veresterung oder eine Additionsreaktion. Beispielsweise kann man einen Farbstoff, worin $Y_1$ und $Y_2$ je ein Rest $HO-CH_2CH_2-$ ist, herstellen und das Zwischenprodukt nach der Kupplung mit Schwefelsäure umsetzen, so dass die Hydroxygruppe in die Sulfatogruppe überführt wird; oder man verwendet einen analogen Farbstoff, worin $Y_1$ und $Y_2$ die Vinylgruppe $H_2C=CH-$ ist, und lagert an das Zwischenprodukt Thioschwefelsäure an, wobei ein Rest $HO_3SS-CH_2CH_2-$ entsteht.

Die Sulfatierung der Hydroxygruppe in einem Farbstoff der Formel (1) oder einem geeigneten Vorprodukt, erfolgt vorzugsweise durch Umsetzung mit konzentrierter Schwefelsäure bei 0 °C bis mässig erhöhter Temperatur. Diese Sulfatierung kann auch durch Reaktion der Hydroxyverbindung mit 2 Äquivalenten Chlorsulfonsäure pro Hydroxygruppe in einem polaren organischen Lösungsmittel wie beispielsweise N-Methylpyrrolidon bei 10 bis 80 °C erfolgen. Vorzugsweise erfolgt die Sulfatierung durch Eintragen der betreffenden Verbindung in Schwefelsäuremonohydrat bei Temperaturen zwischen 5 und 15 °C. Die Einführung eines anderen Restes für $Y_1$ oder $Y_2$ in eine Verbindung der Formel (1) oder ein Zwischenprodukt anstelle eines Chloratoms oder der Sulfatogruppe, beispielsweise einer Thiosulfato- oder Acetatogruppe, erfolgt in an sich bekannter Weise. Ausserdem können Eliminierungsreaktionen an die Synthese angeschlossen werden. Beispielsweise kann man Reaktivfarbstoffe der Formel (1), welche Sulfatoäthylsulfonylreste enthalten, mit halogenwasserstoffabspaltenden Mitteln, wie Natriumhydroxid, behandeln, wobei die Sulfatoäthylsulfonylreste in Vinylsulfonylreste übergehen.

Der oben beschriebene Weg der Herstellung über eine Zwischenstufe des Reaktivrestes geht in vielen Fällen einheitlich und vollständig.

Im folgenden sollen mögliche Ausgangsstoffe, die zur Herstellung der Reaktivfarbstoffe der Formel (1) verwendet werden können, einzeln genannt werden:

Diazokomponenten der Formeln (6) und (7)
1-Amino-3-β-hydroxyäthylsulfonylbenzol,
1-Amino-4β-hydroxyäthylsulfonylbenzol,
1-Amino-4-β-hydroxyäthylsulfonylbenzol-2-sulfonsäure,

1-Amino-3-β-sulfatoäthylsulfonylbenzol,
1-Amino-4-β-sulfatoäthylsulfonylbenzol,
1-Amino-4-β-sulfatoäthylsulfonylbenzol-2-sulfonsäure,

1-Amino-3-vinylsulfonylbenzol,
1-Amino-4-vinylsulfonylbenzol,
1-Amino-4-vinylsulfonylbenzol-2-sulfonsäure,
1-Amino-3-β-chloräthylsulfonylbenzol,
1-Amino-4-β-chloräthylsulfonylbenzol,
1-Amino-4-β-chloräthylsulfonylbenzol-2-sulfonsäure,
1-Amino-3-β-thiosulfatoäthylsulfonylbenzol,
1-Amino-4-β-thiosulfatoäthylsulfonylbenzol,
1-Amino-4-β-thiosulfatoäthylsufonylbenzol-2-sulfonsäure,
1-Amino-3-β-acetatoäthylsulfonylbenzol,
1-Amino-4-β-acetatoäthylsulfonylbenzol,
1-Amino-4-β-acetatoäthylsulfonylbenzol-2-sulfonsäure.

Kupplungskomponenten

1-Amino-8-hydroxynaphthalin-3,6-disulfonsäure (H-Säure),
1-Amino-8-hydroxynaphthalin-4,6-disulfonsäure (K-Säure).

Die Diazotierung der Diazokomponenten der Formeln (6) und (7) bzw. der eine diazotierbare Aminogruppe enthaltenden Zwischenprodukte erfolgt in der Regel durch Einwirkung salpetriger Säure in wässrig-mineralsaurer Lösung bei tiefer Temperatur. Die erste Kupplung auf die Kupplungskomponente erfolgt bei sauren bis stark sauren pH-Werten, die zweite Kupplung bei schwach sauren, neutralen bis schwach alkalischen pH-Werten.

Die Reste $Y_1$ und $Y_2$ in Formel (1) sind faserreaktiv. Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die Reaktivfarbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürliche Cellulosefaser, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulardfärbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern bei Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (1) eignen sich auch zum Druck, vor allem auf Baumwolle, ebenso aber auch zum Bedrucken von stickstoffhaltigen Fasern, z.B. von Wolle, Seide oder Wolle enthaltenden Mischgeweben.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Überfärbe- und Schweissechtheiten, sowie eine gute Plissierechtheit, Bügelechtheit, Reibechtheit und insbesondere eine gegenüber den mit dem aus der EP-A 43 560 bekannten nächstvergleichbaren Farbstoff erhaltenen Färbungen weitaus überlegene Chlorechtheit (Chlorbadewasser- und Chlorwäscheechtheit).

Die nachfolgenden Beispiele dienen zur Erläuterung der Erfindung. Die Temperaturen sind in Celsiusgraden angegeben. Teile sind Gewichtsteile, die Prozentangaben beziehen sich auf Gewichtsprozente, sofern nichts anderes vermerkt. Gewichtsteile stehen zu Volumenteilen im Verhältnis von Kilogramm zu Liter.

Beispiel 1

70,25 Teile 4-β-Sulfatoäthylsulfonyl-anilin werden in 325 Teile Wasser eingetragen und bei 20 bis 22 °C innerhalb einer Stunde mittels Natriumbicarbonat bei einem pH-Wert von 5,3 bis 6,0 gelöst. Sodann werden 54 Volumenteile einer 31%igen wässrigen Salzsäure und 225 Teile Eis zugegeben, um die Lösung kongosauer und auf eine Temperatur von 0 bis 5° zu stellen. Bei dieser Temperatur wird die Diazotierung mittels 32,75 Volumenteilen einer 40%igen wässrigen Natriumnitritlösung durchgeführt. Anschliessend wird ein geringer Überschuss an salpetriger Säure mit 0,5 Teilen Amidosulfonsäure zerstört. Sodann werden 77,8 Teile 1-Amino-8-hydroxynaphthalin-3,6-disulfonsäure zugegeben und der Ansatz 4 bis 5 Stunden bei einer Temperatur zwischen 4 und 8° und einem pH-Wert zwischen 1 und 2 gerührt. Nach dieser Reaktionszeit wird der pH-Wert mit Natriumcarbonat auf 6,0 eingestellt.

In einem separaten Ansatz werden 90,25 Teile 4- β-Sulfatoäthylsulfonyl- 2-sulfonsäure- anilin analog den obigen Angaben diazotiert. Die erhaltene Diazoniumsuspension wird zu der hergestellten Lösung der Monoazoverbindung gegeben. Der pH-Wert wird bei 6 bis 7 gehalten und der Reaktionsansatz noch 3 Stunden gerührt. Die hergestellte Diazoverbindung wird durch Eindampfen des Reaktionsansatzes, gegebenenfalls nach einer Klärfiltration, isoliert.

Es wird ein schwarzes, elektrolythaltiges Pulver erhalten, das die Natriumverbindung der Formel

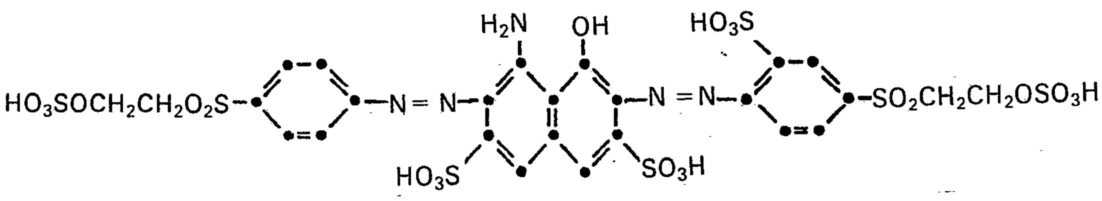

enthält. Diese eignet sich sehr gut als Farbstoff zum Färben von Cellulosefasermaterialien nach den in der Technik üblichen bekannten Färbe- und Druckmethoden, und gängigen Fixiermethoden für faserreaktive Farbstoffe; sie liefert auf diesen Materialien marineblaue Farbtöne mit guten Echtheitseigenschaften.

Beispiel 2

90,25 Teile 4-β-Sulfatoäthylsulfonyl-2-sulfonsäure-anilin werden in 325 Teile Wasser eingetragen und bei 20 bis 22° innerhalb einer Stunde mittels Natriumbicarbonat bei einem pH-Wert von 5,3 bis 6,0 gelöst. Sodann werden 54 Volumenteile einer 31%igen wässrigen Salzsäure und 225 Teile Eis zugegeben, um die Lösung kongosauer und auf eine Temperatur von 0 bis 5° zu stellen. Bei dieser Temperatur wird die Diazotierung mittels 32,75 Volumenteilen einer 40%igen wässrigen Natriumnitritlösung durchgeführt; anschliessend wird ein geringer Überschuss an salpetriger Säure mit 0,5 Teilen Amidosulfonsäure zerstört. Sodann werden 77,8 Teile 1-Amino-8-hydroxynaphthalin-3,6-disulfonsäure zugegeben und der Ansatz 4 bis 5 Stunden bei einer Temperatur zwischen 4 und 8° und einem pH-Wert zwischen 1 und 2 gerührt. Nach dieser Reaktionszeit wird der pH-Wert mit Natriumcarbonat auf 6,0 eingestellt.

In einem separaten Ansatz werden 70,25 Teile 4-β-Sulfatoäthylsulfonyl-anilin analog den obigen Angaben diazotiert. Die erhaltene Diazoniumsuspension wird zu der hergestellten Lösung der Monoazoverbindung gegeben. Der pH-Wert wird bei 6 bis 7 gehalten und der Reaktionsansatz noch 3 Stunden gerührt. Die hergestellte Diazoverbindung wird durch Eindampfen des Reaktionsansatzes, gegebenenfalls nach einer Klärfiltration, isoliert.

Es wird ein schwarzes, elektrolythaltiges Pulver erhalten, das die Natriumverbindung der Formel

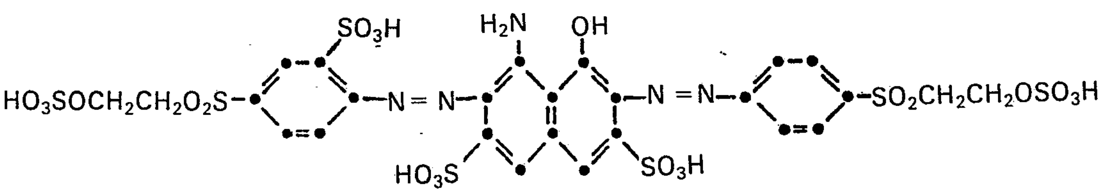

enthält, diese eignet sich sehr gut als Farbstoff zum Färben von Cellulosefasermaterialien nach den in der Technik üblichen, bekannten Färbe- und Druckmethoden und gängigen Fixiermethoden für faserreaktive Farbstoffe; sie liefert auf diesen Materialien marineblaue Farbtöne mit guten Echtheitseigenschaften.

Beispiel 3

90,25 Teile 4-β-Sulfatoäthylsulfonyl-2-sulfonsäure-anilin werden in 325 Teile Wasser eingetragen und bei 20 bis 22° innerhalb einer Stunde mittels Natriumbicarbonat bei einem pH-Wert von 5,3 bis 6,0 gelöst. Sodann werden 54 Volumenteile einer 31%igen wässrigen Salzsäure und 225 Teile Eis zugegeben, um die Lösung kongosauer und auf eine Temperatur von 0 bis 5° zu stellen. Bei dieser Temperatur wird die Diazotierung mittels 32,75 Volumenteilen einer 40%igen wässrigen Natriumnitritlösung durchgeführt; anschliessend wird ein geringer Überschuss an salpetriger Säure mit 0,5 Teilen Amidosulfonsäure zerstört. Sodann werden 77,8 Teile 1-Amino-8-hydroxynaphthalin-4,6-disulfonsäure zugegeben und der Ansatz 4 bis 5 Stunden bei einer Temperatur zwischen 1 und 2 gerührt. Nach dieser Reaktionszeit wird der pH-Wert mit Natriumcarbonat auf 6,0 eingestellt.

In einem separaten Ansatz werden 70,25 Teile 4-β-Sulfatoäthylsulfonyl-anilin analog den obigen Angaben diazotiert. Die erhaltene Diazoniumsuspension wird zu der hergestellten Lösung der Monoazoverbindung gegeben. Der pH-Wert wird bei 6 bis 7 gehalten und der Reaktionsansatz noch 3 Stunden gerührt. Die hergestellte Diazoverbindung wird durch Eindampfen des Reaktionsansatzes, gegebenenfalls nach einer Klärfiltration, isoliert.

Es wird ein schwarzes, elektrolythaltiges Pulver erhalten, das die Natriumverbindung der Formel

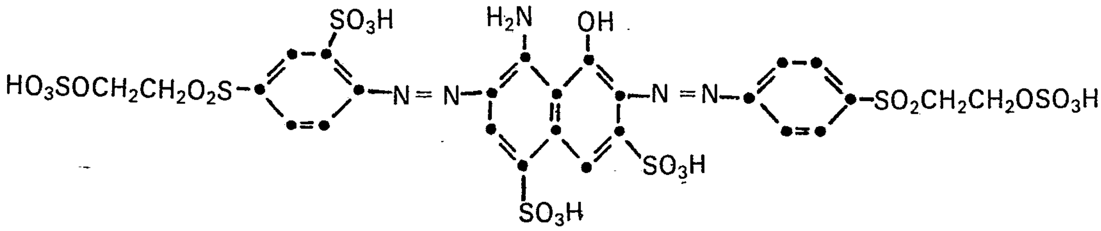

enthält. Diese eignet sich sehr gut als Farbstoff zum Färben von Cellulosefasermaterialien nach den in der Technik üblichen, bekannten Färbe- und Druckmethoden und gängigen Fixiermethoden für faserreaktive Farbstoffe; sie liefert auf diesen Materialien marineblaue Farbtöne mit guten Echtheitseigenschaften.

Beispiel 4

70,25 Teile 4-β-Sulfatoäthylsulfonyl-anilin werden in 325 Teile Wasser eingetragen und bei 20 bis 22 °C innerhalb einer Stunde mittels Natriumbicarbonat bei einem pH-Wert von 5,3 bis 6,0 gelöst. Sodann werden 54 Volumenteile einer 31%igen wässrigen Salzsäure und 225 Teile Eis zugegeben, um die Lösung kongosauer und auf eine Temperatur von 0 bis 5° zu stellen. Bei dieser Temperatur wird die Diazotierung mittels 32,75 Volumenteilen einer 40%igen wässrigen Natriumnitritlösung durchgeführt; anschliessend wird ein geringer Überschuss an salpetriger Säure mit 0,5 Teilen Amidosulfonsäure zerstört. Sodann werden 77,8 Teile 1-Amino-8-hydroxynaphthalin-4,6-disulfonsäure zugegeben und der Ansatz 4 bis 5 Stunden bei einer Temperatur zwischen 4 und 8° und einem pH-Wert zwischen 1 und 2 gerührt. Nach dieser Reaktionszeit wird der pH-Wert mit Natriumcarbonat auf 6,0 eingestellt.

In einem separaten Ansatz werden 90,25 Teile 4- β-Sulfatoäthylsulfonyl- 2-sulfonsäure-anilin analog de obigen Angaben diazotiert. Die erhaltene Diazoniumsuspension wird zu der hergestellten Lösung der Monoazoverbindung gegeben. Der pH-Wert wird bei 6 bis 7 gehalten und der Reaktionsansatz noch 3 Stunden gerührt. Die hergestellte Diazoverbindung wird durch Eindampfen des Reaktionsansatzes, gegebenenfalls nach einer Klärfiltration, isoliert.

Es wird ein schwarzes, elektrolythaltiges Pulver erhalten, das die Natriumverbindung der Formel

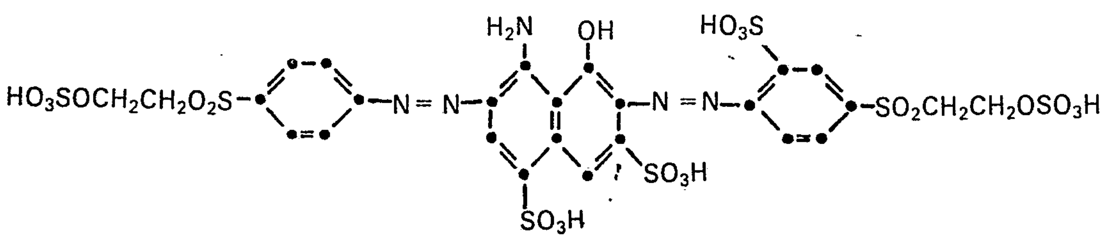

enthält. Diese eignet sich sehr gut als Farbstoff zum Färben von Cellulosefasermaterialien nach den in der Technik üblichen, bekannten Färbe- und Druckmethoden und gängigen Fixiermethoden für faserreaktive Farbstoffe; sie liefert auf diesen Materialien marineblaue Farbtöne mit guten Echtheitseigenschaften.

Nach den in den Beispielen 1 bis 4 beschriebenen Verfahren können weitere wertvolle Reaktivfarbstoffe der angegebenen Konstitution und dem in der letzten Spalte angegebenen Farbton hergestellt werden.

| Beispiele | Konstitution | | Farbton |
|---|---|---|---|
| 5 | 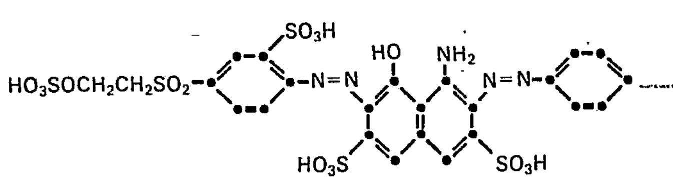 | $—SO_2CH=CH_2$ | Marine Blau |
| 6 | | $—SO_2CH_2CH_2Cl$ | dito |
| 7 | | $—SO_2CH_2CH_2OCOCH_3$ | dito |
| 8 | | $—SO_2CH_2CH_2SSO_3H$ | dito |

| Beispiele | Konstitution (Fortsetzung) | | Farbton |
|---|---|---|---|
| 9 | 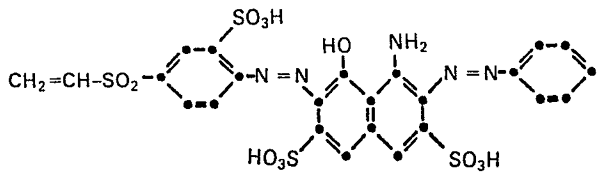 | $-SO_2CH_2CH_2OSO_3H$ | Marine Blau |
| 10 | | $-SO_2CH=CH_2$ | dito |
| 11 | | $-SO_2CH_2CH_2Cl$ | dito |
| 12 | | $-SO_2CH_2CH_2OCOCH_3$ | dito |
| 13 | | $-SO_2CH_2CH_2SSO_3H$ | dito |
| 14 | 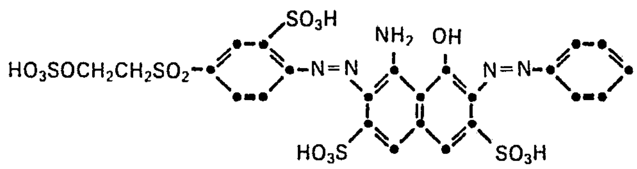 | $-SO_2CH=CH_2$ | dito |
| 15 | | $-SO_2CH_2CH_2Cl$ | dito |
| 16 | | $-SO_2CH_2CH_2OCOCH_3$ | dito |
| 17 | | $-SO_2CH_2CH_2SSO_3H$ | dito |
| 18 | 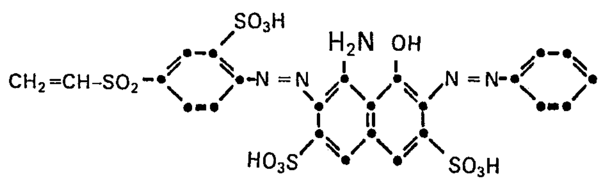 | $-SO_2CH_2CH_2OSO_3H$ | dito |
| 19 | | $-SO_2CH=CH_2$ | dito |
| 20 | | $-SO_2CH_2CH_2Cl$ | dito |
| 21 | | $-SO_2CH_2CH_2OCOCH_3$ | dito |
| 22 | | $-SO_2CH_2CH_2SSO_3H$ | dito |
| 23 | 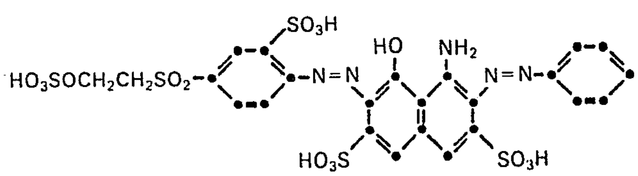 | $-SO_2CH=CH_2$ | dito |
| 24 | | $-SO_2CH_2CH_2Cl$ | dito |
| 25 | | $-SO_2CH_2CH_2OCOCH_3$ | dito |
| 26 | | $-SO_2CH_2CH_2SSO_3H$ | dito |
| 27 | 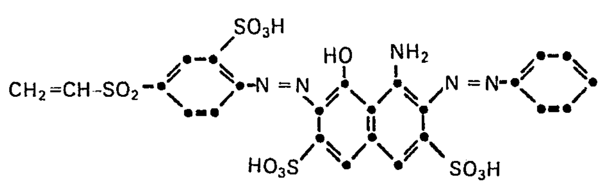 | $-SO_2CH_2CH_2OSO_3H$ | dito |
| 28 | | $-SO_2CH=CH_2$ | dito |
| 29 | | $-SO_2CH_2CH_2Cl$ | dito |
| 30 | | $-SO_2CH_2CH_2OCOCH_3$ | dito |
| 31 | | $-SO_2CH_2CH_2SSO_3H$ | dito |
| 32 | 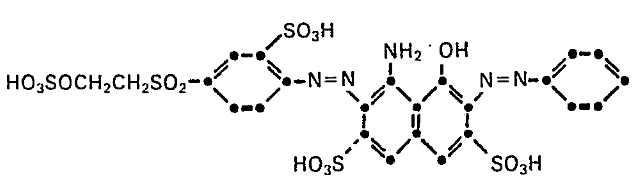 | $-SO_2CH=CH_2$ | dito |
| 33 | | $-SO_2CH_2CH_2Cl$ | dito |
| 34 | | $-SO_2CH_2CH_2OCOCH_3$ | dito |
| 35 | | $-SO_2CH_2CH_2SSO_3H$ | dito |

| Beispiele | Konstitution (Fortsetzung) | | Farbton |
|---|---|---|---|
| 36 | 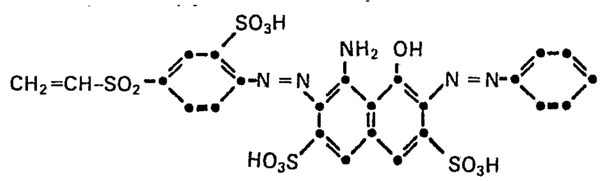 | $-SO_2CH_2CH_2OSO_3H$ | Marine Blau |
| 37 | | $-SO_2CH=CH_2$ | dito |
| 38 | | $-SO_2CH_2CH_2Cl$ | dito |
| 39 | | $-SO_2CH_2CH_2OCOCH_3$ | dito |
| 40 | | $-SO_2CH_2CH_2SSO_3H$ | dito |

Färbevorschrift I

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40° mit 100 Teilen Baumwollgewebe ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40° gehalten. Danach wird die gefärbte Ware gespült, während einer Viertelstunde mit einem nichtionogenen Waschmittel kochend geseift, nochmals gespült und getrocknet.

Färbevorschrift II

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35° mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35° gehalten. Danach wird die Temperatur innerhalb von 20 Minuten auf 60° erhöht. Die Temperatur wird weitere 35 Minuten bei 60° gehalten. Danach wird gespült, während einer Viertelstunde mit einem nichtionogenen Waschmittel kochend geseift, nochmals gespült und getrocknet.

Färbevorschrift III

8 Teile des gemäss Beispiel 1 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25° mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60° erhöht. Die Temperatur wird weitere 90 Minuten auf 60° gehalten. Danach wird gespült, während einer Viertelstunde mit einem nichtionogenen Waschmittel kochend geseift, nochmals gespült und getrocknet.

Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70% seines Gewichts zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38°bé) enthält. Mit der erhaltenen Lösung wird ein Baumwollgewebe foulardiert, so dass es um 70% seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichtes zunimmt, und dann getrocknet. Dann imprägniert man das Gewebe mit einer 20° warmen Lösung, die pro Liter 4 g Natriumhydroxyd und 300 g Natriumchlorid enthält, quetscht auf 75% Gewichtszunahme ab, dämpft die Färbung während 30 Sekunden bei 100 bis 102°, spült, seift während einer Viertelstunde in einer 0,3%igen kochenden Lösung eines nichtionogenen Waschmittels, spült und trocknet.

Druckvorschrift I

3 Teile des gemäss Beispiel 1 erhaltenen Reaktivfarbstoffes werden unter schnellem Rühren in

100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102° in gesättigtem Dampf. Das bedruckte Gewebe wird dann gespült, gegebenenfalls kochend geseift und nochmals gespült, und anschliessend getrocknet.

Druckvorschrift II

5 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102° in gesättigtem Dampf. Das bedruckte Gewebe wird dann gespült, gegebenenfalls kochend geseift und nochmals gespült, und anschliessend getrocknet.

**Patentansprüche**

1. Reaktivfarbstoffe der Formel

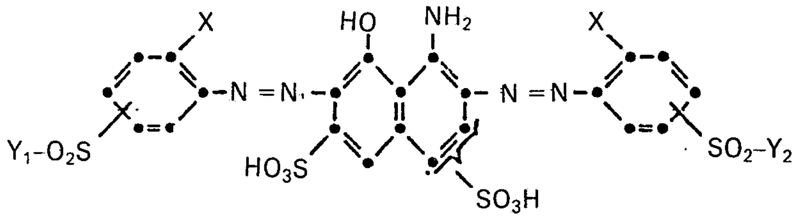
(1)

worin
ein X Wasserstoff und das andere X Sulfo, $Y_1$ und $Y_2$ unabhängig voneinander ein Rest $-CH{=}CH_2$, $-CH_2CH_2OSO_3H$, $-CH_2CH_2SSO_3H$, $-CH_2CH_2Cl$ oder $-CH_2CH_2OR$, und R niedrigmolekulares Alkanoyl; oder Benzoyl oder Benzolsulfonyl, das durch $C_{1-4}$-Alkyl, $C_{1-4}$-Alkoxy, Halogen, Carboxy oder Sulfo substituiert sein kann, ist.

2. Reaktivfarbstoffe gemäss Anspruch 1, worin $Y_1$ und $Y_2$ je ein Rest $-CH{=}CH_2$ oder $-CH_2CH_2O$-$SO_3H$ ist.

3. Reaktivfarbstoff gemäss Anspruch 2, der Formel

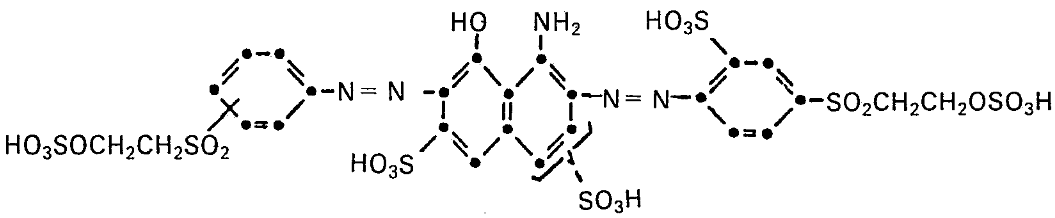
(2)

4. Reaktivfarbstoff gemäss Anspruch 2, der Formel

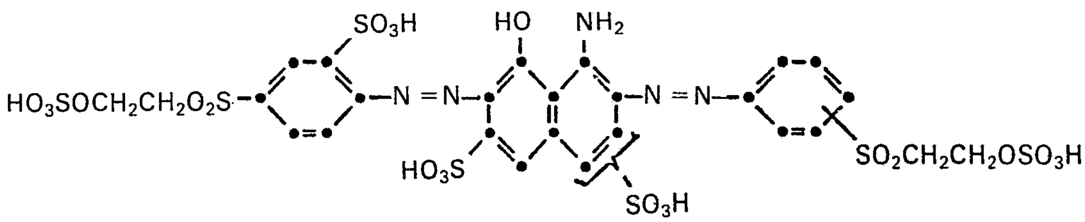
(3)

5. Reaktivfarbstoff gemäss Anspruch 4, der Formel

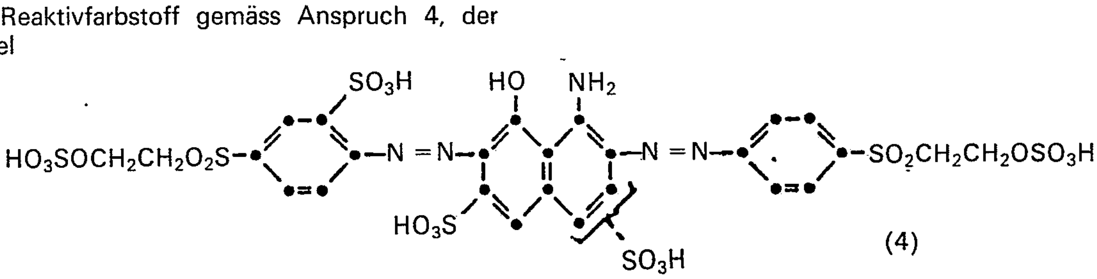
(4)

(4)

6. Reaktivfarbstoff gemäss Anspruch 5, der Formel

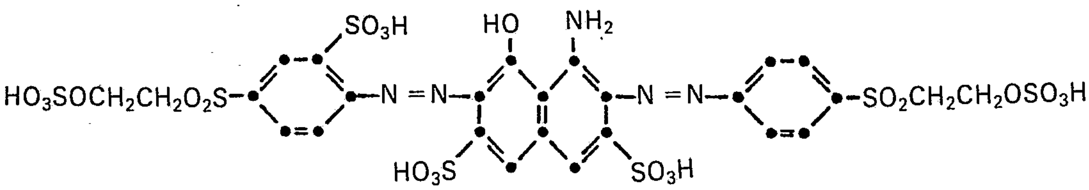
(5)

7. Verfahren zur Herstellung von Reaktivfarbstoffen gemäss Anspruch 1, dadurch gekennzeichnet, dass man Diazokomponenten der Formeln

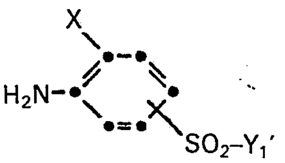
(6)

und

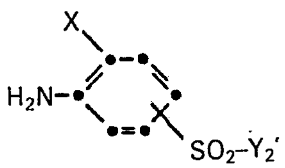
(7)

worin ein X Wasserstoff und das andere X Sulfo und $Y_1'$ und $Y_2'$ unabhängig voneinander –OH oder ein Rest $-CH=CH_2$, $-CH_2CH_2OSO_3H$, $-CH_2CH_2SSO_3H$, $-CH_2CH_2Cl$ oder $-CH_2CH_2OR$ ist, und R die in Anspruch 1 angegebene Bedeutung hat, diazotier und mit 1-Amino-8-hydroxynaphthalin-3,6- oder -4,6-disulfonsäure kuppelt, und, falls $Y_1'$ bzw. $Y_2'$ –OH ist, dieses in einen der anderen für $Y_1'$ und $Y_2'$ genannten Rest überführt und gegebenenfalls eine weitere Umwandlungsreaktion anschliesst.

8. Verwendung der Reaktivfarbstoffe gemäss Anspruch 1, zum Färben oder Bedrucken von cellulosehaltigen Fasermaterialien.

9. Verwendung gemäss Anspruch 8, zum Färben oder Bedrucken von Baumwolle.

## Revendications

1. Colorants réactifs de formule

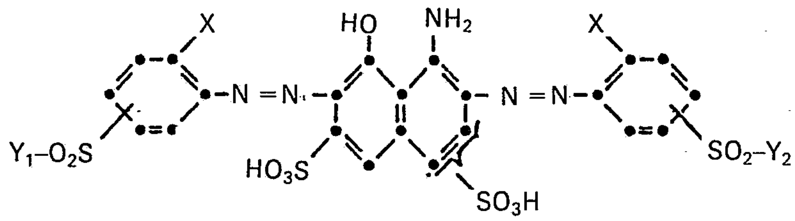
(1)

dans laquelle un des X représente un atome d'hydrogène et l'autre X un groupe sulfo, $Y_1$ et $Y_2$ représentent, indépendamment l'un de l'autre, un radical $-CH=CH_2$, $-CH_2CH_2OSO_3H$, $-CH_2CH_2SSO_3H$, $-CH_2CH_2Cl$ ou $-CH_2CH_2OR$, et R représente un groupe alkanoyle inférieur; ou un groupe benzoyle ou benzènesulfonyle, qui peut être substitué par un ou des groupes alkyle en $C_1$–$C_4$, ou alkoxy en $C_1$–$C_4$, par un ou des atomes d'halogène ou par un ou des groupes carboxy ou sulfo.

2. Colorants réactifs selon la revendication 1, dans lesquels $Y_1$ et $Y_2$ représentent chacun un radical $-CH=CH_2$ ou $-CH_2CH_2OSO_3H$.

3. Colorant réactif selon la revendication 2, de formule

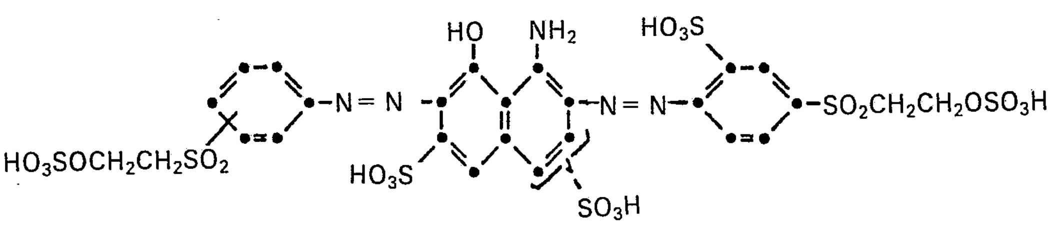
(2)

4. Colorant réactif selon la revendication 2, de formule

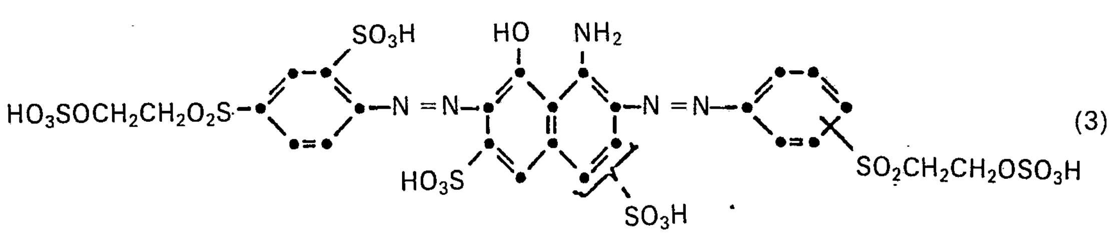
(3)

5. Colorant réactif selon la revendication 4, de formule

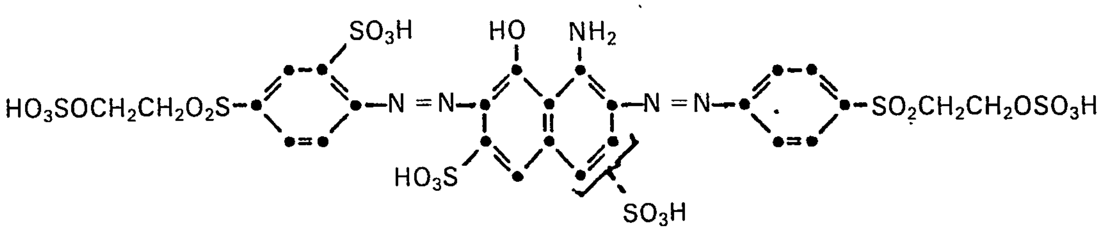

(4)

6. Colorant réactif selon la revendication 5, de formule

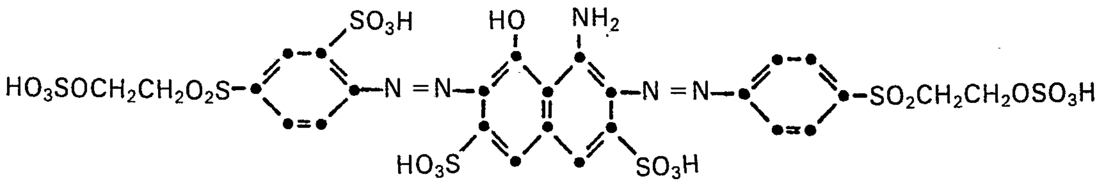

(5)

7. Procédé de préparation des colorants selon la revendication 1, caractérisé en ce que les composants diazo de formules

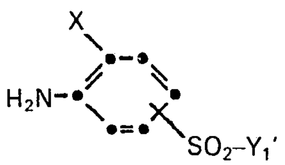

(6)

et

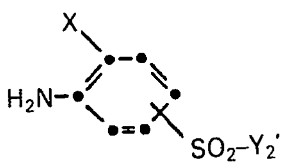

(7)

dans lesquels un des X représente un atome d'hydrogène et l'autre X un groupe sulfo et $Y_1'$ et $Y_2'$ représentent, indépendamment l'un de l'autre, un groupe –OH ou un radical $-CH=CH_2$, $-CH_2CH_2OSO_3H$, $-CH_2CH_2SSO_3$ H, $-CH_2CH_2Cl$ ou $-CH_2CH_2OR$, et R répond à la définition de la revendication 1, sont diazotés et copulés sur l'acide 1-amino-8-hydroxynaphtalène-3,6- ou -4,6-disulfonique, et dans le cas où $Y_1'$ ou $Y_2'$ représente un groupe –OH, celui-ci est converti en un autre radical mentionné pour $Y_1'$ et $Y_2'$, et éventuellement, on ajoute une autre réaction de conversion.

8. Utilisation des colorants réactifs selon la revendication 1, pour la teinture ou l'impression de matières fibreuses contenant de la cellulose.

9. Utilisation selon la revendication 8, pour la teinture ou l'impression du coton.

**Claims**

1. A reactive dye of the formula

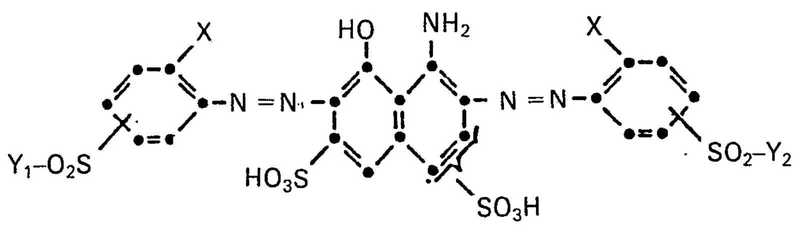

(1)

wherein one X is hydrogen and the other X is sulfo, each of $Y_1$ and $Y_2$ independently of the other is a radical $-CH=CH_2$, $-CH_2CH_2OSO_3H$, $-CH_2CH_2SSO_3H$, $-CH_2CH_2Cl$ or $-CH_2CH_2OR$, in which R is low molecular alkanoyl; or is benzoyl or benzenesulfonyl which may be substituted by $C_1$–$C_4$-alkyl, $C_1$–$C_4$-alkoxy, halogen, carboxyl or sulfo.

2. A reactive dye according to Claim 1, wherein each of $Y_1$ and $Y_2$ is a $-CH=CH_2$ or $-CH_2CH_2O$-$SO_3H$ radical.

3. A reactive dye according to Claim 2 of the formula

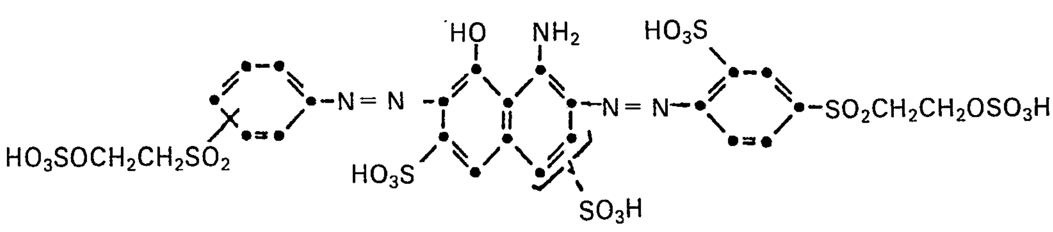

(2)

4. A reactive dye according to Claim 2 of the formula

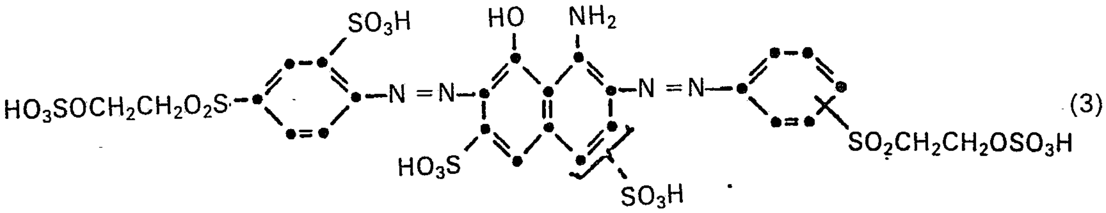
(3)

5. A reactive dye according to Claim 4 of the formula

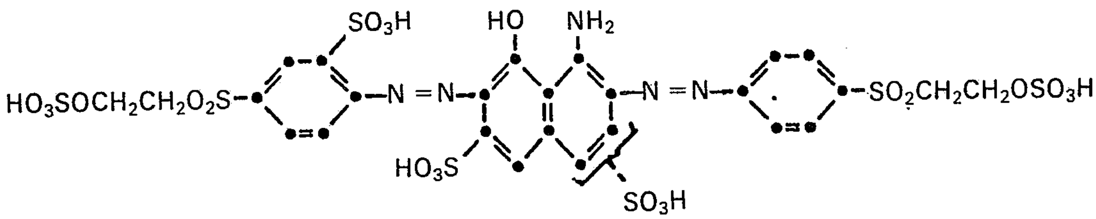
(4)

6. A reactive dye according to Claim 5 of the formula

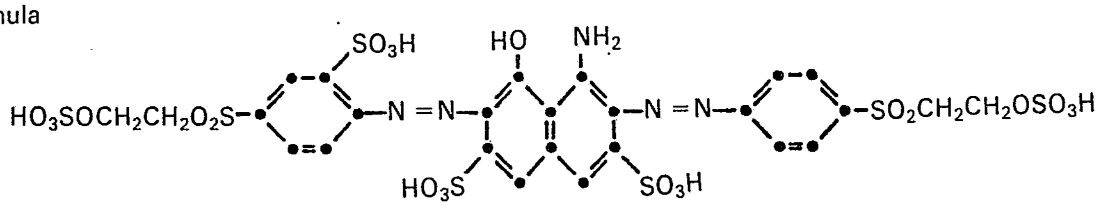
(5)

7. A process for the preparation of a reactive dye according to Claim 1, which comprises diazotising diazo components of the formula

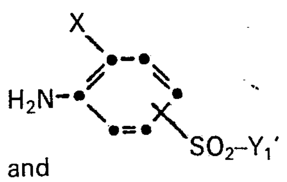
(6)

and

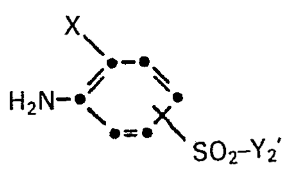
(7)

wherein one X is hydrogen and the other X is sulfo and each of $Y_1'$ and $Y_2'$ independently of the other is –OH or a radical $-CH=CH_2$, $-CH_2CH_2OSO_3H$, $-CH_2CH_2SSO_3H$, $-CH_2CH_2Cl$ or $-CH_2CH_2OR$, where R is as defined in Claim 1, and coupling the intermediate to 1-amino-8-hydroxynaphthalene-3,6- or -4,6-disulfonic acid and, if $Y_1'$ or $Y_2'$ is –OH, converting this group into one of the other radicals as defined for $Y_1'$ and $Y_2'$ and, if desired, carrying out a further conversion reaction.

8. The use of a reactive dye according to Claim 1, for dyeing or printing cellulosic fibre material.

9. The use according to Claim 8, for dyeing or printing cotton.